# EUROPEAN PATENT APPLICATION

(11) **EP 1 806 926 A2**
(43) Date of publication of application: **11.07.2007**
(21) Application number: 06121438.3
(22) Date of filing: 28.09.2006
(51) Int. Cl.: H04N 7/16

(54) **Method and apparatus for managing content on network and recording medium storing program for performing the method**

(30) Priority: 03.11.2005 KR 20050104928
(71) Applicant: Samsung Electronics Co., Ltd., Suwon-si 442-742 Gyeonggi-Do (KR)
(72) Inventor: Kim, Deok-ho, Seocho-gu, Seoul (KR); Kim, Nam-soon, Gyeonggi-do, Suwon-si (KR)
(74) Representative: Waddington, Richard

(57) **Abstract**

A method and apparatus for managing contents on a network, such as a home network, which can provide unified information on the contents using a physical view form or various logical view forms, regardless of the power on/off state of client devices (202-205) connected to the network, and a computer-readable recording medium having embodied thereon a computer program for the method, are provided. The method of managing contents on a network in which a server (201) and at least one client device are connected to one another, includes operations of the server (201) comprising; receiving a content list request from one of the at least one client device; and providing one of physical view information and at least one type of logical view information having information on the contents which can be provided by the at least one client device to a client device which transmits the content list request.

## Description

Apparatuses and methods consistent with the present invention relate to content management on a network, and more particularly, to content managing capable of easily searching and reproducing contents on a network.

In general, in order to search for required contents on a network such as a home network, a content sharing procedure must be performed in all the devices connected to the network. In the content sharing procedure, discovery of a device, request and reception of the contents of the device, and selection and execution of desired contents are sequentially performed.

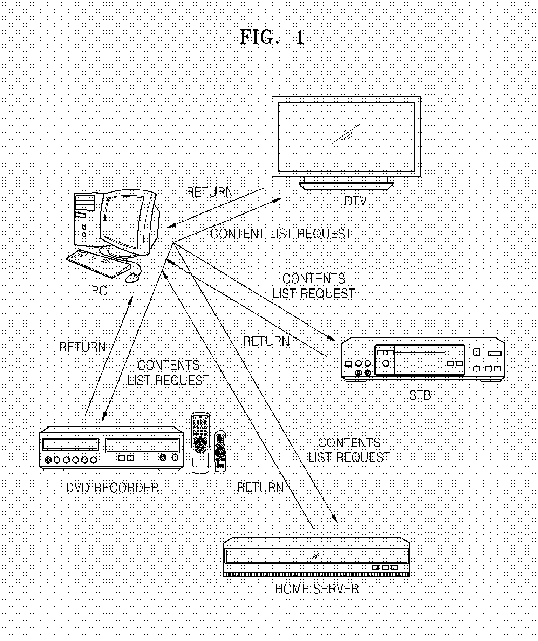

FIG. 1 illustrates an example of a home network for explaining an existing content sharing process. In order to search for required contents, a personal computer (PC) connected to the home network requests a content list from a digital television (DTV), a set-top box (STB), a home server, and a digital versatile disc (DVD) recorder (DVD-R) and receives the content list.

When desired contents stored in a device connected to a network are reproduced, since the process of searching the contents stored in all the devices must be repeatedly performed, the contents to be reproduced cannot be easily searched for and thus it takes a lot of time to search the contents.

In order to solve this problem, a technology in which a server unifies and manages contents which can be provided by a plurality of client devices connected to a network has been suggested. In FIG. 1, the PC, the DTV, the STB, and the DVD recorder are the plurality of client devices.

The present invention provides a method and apparatus for managing contents on a network, such as a home network, which can unify and provide information on the contents provided by client devices connected to the network in various forms, and a computer-readable recording medium having embodied thereon a computer program for the method.

The present invention also provides a method and apparatus for managing contents on a network, such as a home network, which can provide unified information on the contents using a physical view form or various logical view forms, regardless of the power on/off state of client devices connected to the network, and a computer-readable recording medium having embodied thereon a computer program for the method.

The present invention also provides a method and apparatus for managing contents on a network, such as a home network, which can unify and provide the contents which can be provided by client devices connected to the network, based on client priority, and a computer-readable recording medium having embodied thereon a computer program for the method.

The present invention also provides a method and apparatus for managing contents on a network, such as a home network, which can manage the contents such that it is possible to easily reproduce the contents stored in a client device that is in the off state among client devices connected to the network, and a computer-readable recording medium having embodied thereon a computer program for the method.

According to the present invention there is provided an apparatus and method as set forth in the appended claims. Preferred features of the invention will be apparent from the dependent claims, and the description which follows.

According to an aspect of the present invention, there is provided a method for managing contents on a network in which a server and at least one client device are connected to each other, wherein the server includes: a transmitting/receiving unit which is operable to receive a content list request from one of the at least one client device and to transmit view information having information on the contents which can be provided by the at least one client device to a client device which is operable to transmit the content list request; a storage unit which is operable to store the information on all the contents provided by the at least one client device; and a processor which is operable to generate one of physical view information and at least one type of logical view information based on the information stored in the storage unit and to transmit the generated view information to the transmitting/receiving unit, when receiving the content list request from the transmitting/receiving unit.

The at least one type of logical view information may include logical view information based on client priority, logical view information based on a content type, and logical view information based on additional content information. The logical view information based on the client priority may be updated whenever a corresponding client device accesses the server.

The physical view information and the logical view information may include information based on a power on/off state of the at least one client device.

The method may further include turning on the power of the selected client device through the network by the server, if the power of a client device selected based on the physical view information is in the power off state; changing the state of the selected client device in the physical view information by the server, if the power of the selected client device is turned on; including the information on the contents stored in the selected client device into the physical view information by the server; and requesting the selected client device to reproduce the selected contents by the server, if the contents are selected based on the physical view information.

The method may further include turning on the power of the corresponding client device through the network by the server, if the power of a client device corresponding to contents selected based on the logical view information is in the power off state; changing the state of the selected contents in the logical view information by the server, if the power of the corresponding client device is turned on; and requesting the corresponding client device to reproduce the selected contents by the server.

According to another aspect of the present invention, there is provided an apparatus for managing contents on a network in which a server and at least one client device are connected to each other, wherein the server includes: a transmitting/receiving unit which is operable to receive a content list request from one of the at least one client device and to transmit view information having information on the contents which can be provided by the at least one client device to the client device which is operable to transmit the content list request; a storage unit which is operable to store the information on all the contents provided by the at least one client device; and a processor which is operable to generate one of physical view information and at least one type of logical view information based on the information stored in the storage unit and to transmit the generated view information to the transmitting/receiving unit, when receiving the content list request from the transmitting/receiving unit.

According to another aspect of the present invention, there is provided a computer-readable medium having embodied thereon a computer program for a method for managing contents on a network.

All of the features described herein may be combined with any of the above aspects, in any combination.

For a better understanding of the invention, and to show how embodiments of the same may be carried into effect, reference will now be made, by way of example, to the accompanying diagrammatic drawings in which:
FIG. 1 illustrates an example of a home network for explaining an existing content sharing procedure;
FIG. 2 illustrates an example of a network having a content managing apparatus according to an exemplary embodiment of the present invention;
FIG. 3 illustrates an example of a physical view displayed on a first client device based on physical view information provided from a server illustrated in FIG.2;
FIGS. 4A through 4C illustrate examples of logical views displayed on the first client device based on logical view information generated by a processor illustrated in FIG. 2;
FIG. 5 is a flowchart of a content managing method according to an exemplary embodiment of the present invention;
FIG. 6 is a flowchart of a content managing method according to another exemplary embodiment of the present invention;
FIG. 7 is a flowchart of a content managing method according to another exemplary embodiment of the present invention; and
FIG. 8 is a flowchart illustrating an information deleting operation of a client device in the content managing method of FIG. 6 or 7.

Hereinafter, exemplary embodiments of the present invention will be described with reference to the accompanying drawings.

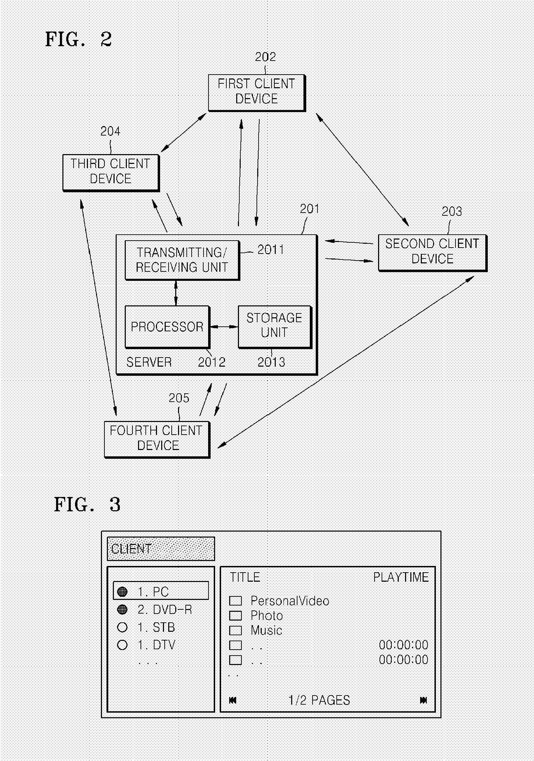

FIG. 2 illustrates an example of a network having a content managing apparatus according to an exemplary embodiment of the present invention, in which a server 201 and first to fourth client devices 202 through 205 are connected to one another.

If the network of FIG. 2 is a home network, the server 201 may be defined as a home server. The server 201 includes a transmitting/receiving unit 2011, a processor 2012, and a storage unit 2013.

The transmitting/receiving unit 2011 transmits/receives information with each one of the first to fourth client devices 202 through 205 and the processor 2012 and a signal for controlling a power on/off state of the first to fourth client devices 202 through 205, through the network.

That is, when receiving a content list request from any one of the first to fourth client devices 202 through 205, the transmitting/receiving unit 2011 transmits the content list request to the processor 2012. When receiving the content list request, a detailed query determined in accordance with the input of a user of the client device which transmits the content list request is also received. The detailed query includes information on whether the content list requested by the user is a logical view or a physical view. Accordingly, the transmitting/receiving unit 2011 transmits the detailed query to the processor 2012.

When receiving from the processor 2012 the view information having information on all the contents which can be provided by the first to fourth client devices 202 through 205, the transmitting/receiving unit 2011 transmits the view information to the client device which transmits the content list request. The transmitting/receiving unit 2011 can transmit a reproduction request signal of the selected contents to the client device having the selected contents.

The processor 2012 unifies and manages the information on all the contents which can be provided by the first to fourth client devices 202 through 205 connected to the network.

That is, the processor 2012 collects the information on all of the contents which can be provided by the first to fourth client devices 202 to 205 through the transmitting/receiving unit 2011. The processor 2012 can parse metadata that is received from the first to fourth client devices 202 to 205 and collect the information on the contents based on the parsed result. The first to fourth client devices 202 to 205 can transmit the metadata of the contents whenever stored contents are corrected or deleted or new contents are generated.

The processor 2012 stores the collected information on the contents in the storage unit 2013. The information on the contents that can be provided by the first to fourth client devices 202 to 205 is unified and managed in the storage unit 2013 by the processor 2012. The processor 2012 can generate physical view information or various forms of logical view information based on the information on the contents stored in the storage unit 2013.

When, for example, the first client device 202 requests the content list through the transmitting/receiving unit 2011, the processor 2012 generates any one of the physical view information and at least one piece of logical view information based on the information on the contents stored in the storage unit 2013 and provides the view information to the first client device 202.

The physical view information and the at least one piece of logical view information may have the information on all the contents stored in the first to fourth client devices 202 to 205. It may be determined whether the processor 2012 generates the physical view information or the logical view information in accordance with the input of the user of the first client device 202. That is, the processor 2012 parses the detailed query which is received together with the content list request and determines whether the physical view information or the logical view information is generated in accordance with the parsed result.

The physical view information has content list information based on the client device, as illustrated in FIG. 3. FIG. 3 illustrates an example of a physical view displayed on the first client device 202 based on the physical view information provided from the server 201.

Referring to FIG. 3, the client devices include a PC, a DVD-R, a set-top box (STB), and a digital television (DTV). The PC is selected, and a content list stored in the selected PC is displayed. In FIG. 3, the client devices PC and DVD-R indicated by "•" are in the power on state and the client devices STB and DTV indicated by "o" are in the power off state. The physical view information provided from the server 201 includes information (• and o) based on the power on/off state of the first to fourth client devices 202 to 205.

When the first client device 202 selects a client device which is in the power off state (for example, STB) based on the physical view illustrated in FIG. 3, the processor 2012 of the server 201 allows the client device which is in the power off state to be turned on via the network. The processor 2012 can request the transmitting/receiving unit 2011 to turn on the client device which is in the power off state. To turn on the client device, it may be controlled via the network using a wake on Local Area Network (LAN) technology. Accordingly, the transmitting/receiving unit 2011 is configured to control the power on/off state of the client devices via the network using the wake on LAN technology.

When the client device which is in the off state is turned on, the processor 2012 processes the contents which can be provided by the client device which is in the power on state, as the contents which can be immediately reproduced. In order to apply this state change, the processor 2012 can update the physical view information provided to the first client device 202.

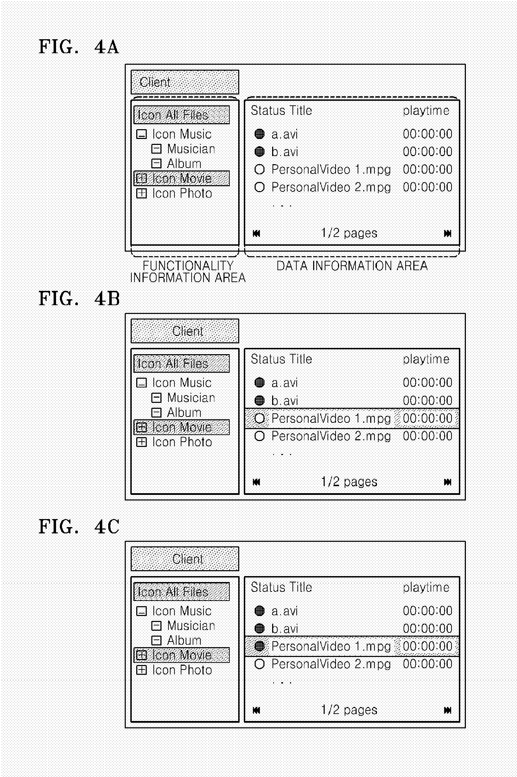

The logical view information has the content list information based on the contents, as illustrated in FIGS. 4A through 4C. FIGS. 4A through 4C illustrate examples of logical views displayed on the first client device 202 based on the logical view information generated by the processor 2012.

Referring to FIG. 4A, the logical view may be defined as a functionality information area and a data information area of the contents which can be provided. In FIG. 4A, "icon Movie" is selected in the functionality information area and the information on the contents included therein is displayed in the data information area.

That is, FIGS. 4A through 4C illustrate examples of the logical views based on a content type. Accordingly, in FIGS. 4A through 4C, the type information of the contents which can be provided by the first to fourth client devices 202 to 205 is displayed in the functionality information area and information for classifying the contents which can be provided by the first to fourth client devices 202 to 205 by the content type is displayed in the data information area.

The contents indicated by "•" in the data information area of FIG. 4A indicate that the client device in which corresponding contents are stored is turned on, and thus the corresponding contents can be immediately reproduced. The contents indicated by "o" in the data information area indicate that the client device in which corresponding contents are stored is turned off, and thus the corresponding contents cannot be immediately reproduced.

As illustrated in FIG. 4B, when "PersonalVideol.mpg" which cannot be immediately reproduced is selected after the logical view information illustrated in FIG. 4A is provided to the first client device 202, since the client device corresponding to the contents "PersonalVideo1.mpg" is in the power off state, the processor 2012 turns on the corresponding client device through the network.

For example, if the corresponding client device is the second client device 203, the processor 2012 requests the transmitting/receiving unit 2011 to turn on the second client device 203 through the network. As described with reference to FIG. 3, the transmitting/receiving unit 2011 can turn on the client device through the network.

When the second client device 203 is turned on, the processor 2012 may ask the user of the first client device 202 whether the second client device 203 is desired to be driven through the transmitting/receiving unit 2011.

When the second client device 203 is turned on, as illustrated in FIG. 4C, the processor 2012 generates the changed logical view information such that the logical view, in which the state of the contents "PersonalVideo1.mpg" is changed, to be immediately reproduced, is displayed on the first client device 201. The generated logical view information is transmitted to the transmitting/receiving unit 2011. Accordingly, the transmitting/receiving unit 2011 provides the changed logical view information to the first client device 201 through the network. Furthermore, the processor 2012 may request the reproduction of the selected contents "PersonalVideo1.mpg" to the second client device 203 through the transmitting/receiving unit 2011. Accordingly, the contents reproduced on the second client device 203 are directly transmitted to the first client device 201, not through the server 201.

As can be seen from FIGS. 4A through 4C, the logical view information generated by the processor 2012 includes the information (• and o) based on the power on/off state of the first to fourth client devices 202 to 205.

The logical view information generated by the processor 2012 may include logical view information based on client priority, logical view information based on the content type, and logical view information based on additional content information.

The logical view information based on the client priority is managed based on a recent access time between a corresponding client device and the server 201. The logical view information based on the client priority is updated by the processor 2012 whenever the corresponding client device accesses the server 201.

The content type represents whether the contents correspond to audio, video, a combination of audio and video, and document. The video may be a still image or a moving picture. The additional content information is information except the content type, and may include a registered date of the contents, a registrant of the contents, the title of the contents, a manufacturer, the name of a singer, and a name of an actor.

In addition, the processor 2012 monitors the connection state between the server 201 and each one of the first to fourth client devices 202 to 205. The server 210 determines if one of the first to fourth client devices is not connected to the server 201 for a predetermined time. If the non-connection state lasts for the predetermined time, the processor 2012 deletes the information on the client device that is in the non-connection state from the information on the contents that are managed in the storage unit 2013. Accordingly, the physical view information and the logical view information generated by the processor 2012 do not include the information on the client device that is in the non-connection state.

The storage unit 2013 stores the information on all the contents that can be provided by the first to fourth client devices 202 to 205, which is collected by the server 201.

When the network is the home network, the first to fourth client devices 202 to 205 may be household appliances, as illustrated in FIG. 1. When the network is an office network, the first to fourth client devices 202 to 205 may be office equipment devices.

The first to fourth client devices 202 to 205 transmit the detailed query to the server 201 together with the content list request. If the user wants the physical view, the first to fourth client devices 202 to 205 receive the physical view information from the server 201, and, if the user wants a specific logical view, the first to fourth client devices 202 to 205 receive the specific logical view information from the server 201.

When the physical view information or the specific logical view is received from the server 201, the first to fourth client devices 202 to 205 parse and display the received information. Accordingly, the screen illustrated in FIG. 3 or FIGS. 4A through 4C can be displayed.

If the user of one of the first to fourth client devices 202 to 205 selects one of the client devices or one of the contents based on the displayed physical view or logical view, another of the first to fourth client devices 202 to 205 transmits the selected information to the server 201.

If the selected information corresponds to the client device which is in the power off state or if the selected information corresponds to the contents to be provided by the client device which is in the power off state, the corresponding client device is turned on by the server 201 and the first to fourth client devices 202 to 205 are held in a standby state until the corresponding client device is in a ready state.

At this time, a message query about the power status of the corresponding client device, may be received from the server 201. If the message query is received and the user of one of the first to fourth client devices 202 to 205 wants to turn on the client device, the server 201 turns on the corresponding client device.

When the corresponding client device is turned on, the selected contents can be immediately reproduced, and, when the sever 201 requests the corresponding client device to reproduce the selected contents, the first to fourth client devices 202 to 205 directly receive the data of the selected contents from the corresponding client device.

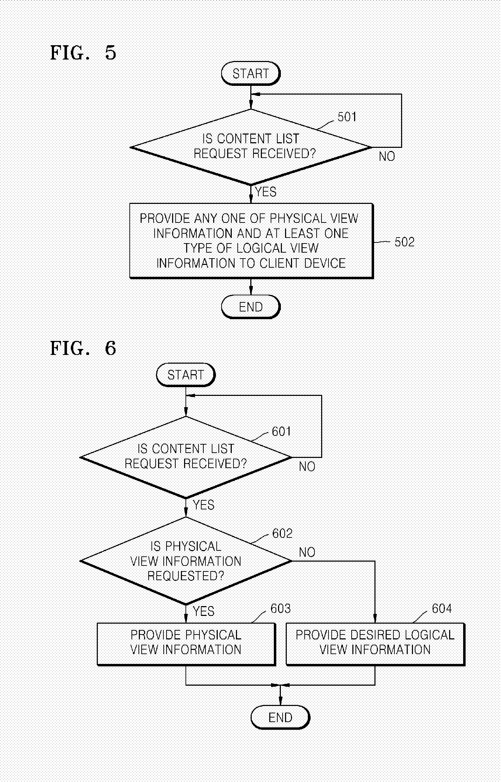

FIG. 5 is a flowchart of a content managing method according to an exemplary embodiment of the present invention. Hereinafter, method illustrated by the flowchart of FIG. 5 will be described with reference to FIGS. 2 and 5.

When the server 201 receives a content list request from one of the first to fourth client devices 202 to 205 connected to the network (operation 501), the server 201 provides any one of physical view information and at least one piece of logical view information on contents provided by the first to fourth client devices 202 to 205 connected to the network to the client device which transmits the content list request (operation 502).

If the client device, which transmits the content list request, is the first client device 202 illustrated in FIG. 2, the user who uses the first client device 202 can know the contents stored in the first to fourth client devices 202 to 205 connected to the network, based on a physical view or a logical view provided through the first client device 202.

The physical view information and the logical view information are the same as that described with reference to FIGS. 2 through 4. Accordingly, the logical view information may include logical view information based on client priority, logical view information based on the content type, and logical view information based on additional content information.

The logical view information based on the client priority is updated by the server 201 whenever the corresponding client device (for example, the first client device 202) accesses the server 201, and is set based on the access time between the corresponding client device and the server 201. The access time may be a recent access time between the corresponding client device and the server 201.

In addition, the physical view information and the logical view information may include the information on a client device that is in the power off state with the client devices connected to the network, as described with reference to FIGS. 2 through 4.

FIG. 6 is a flowchart of a content managing method according to another exemplary embodiment of the present invention. Hereinafter, the method illustrated by the flowchart of FIG. 6 will be described with reference to FIGS. 2 and 6.

When a content list request is received from one of the first to fourth client devices 202 to 205 connected to the network (operation 601), the server 201 checks whether the client device, which transmits the content list request, requests a physical view (operation 602). The server 201 can check whether the client device, which transmits the content list request, requests a physical view, based on the result of parsing the detailed query received together with the content list request. The detailed query is determined in accordance with an input of a user, as described with reference to FIG. 2.

When the client device, which transmits the content list request, requests a physical view, the server 201 provides physical view information to the client device (operation 603). The physical view information provided at this time is the same as that illustrated in FIG. 3.

However, when the client device, which transmits the content list request, does not want a physical view, the server 201 provides desired logical view information (operation 604). As described above, the logical view information may include logical view information based on client priority, logical view information based on the content type, and logical view information based on additional content information. Accordingly, when the user wants the logical view information based on the client priority in the various forms of logical view information which can be provided, the server 201 provides the logical view information based on the client priority to the client device which transmits the content list request, in operation 604.

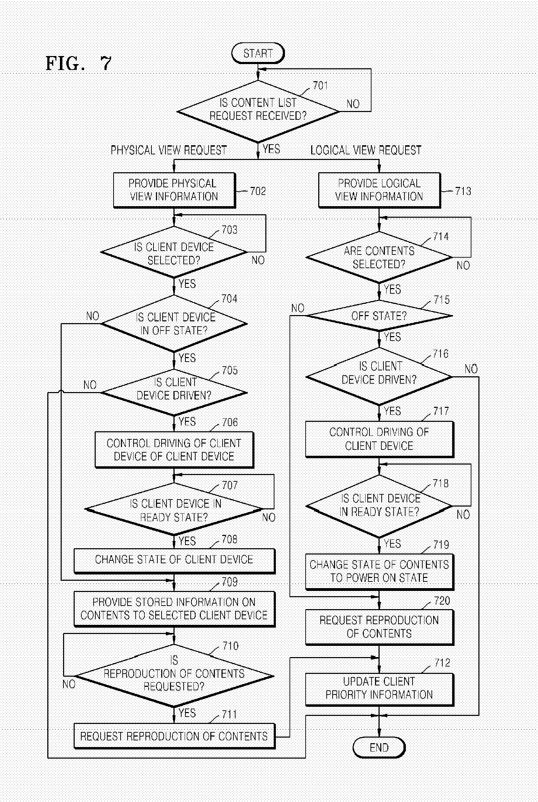

FIG. 7 is a flowchart of a content managing method according to another exemplary embodiment of the present invention. Hereinafter, the method illustrated by the flowchart of FIG. 7 will be described with reference to FIGS. 2 and 7.

When a content list request is received from one of the first to fourth client devices 202 to 205 connected to the network (operation 701), the server 201 checks whether the client device which transmits the content list request (hereinafter, referred to as the first client device 202, for sake of convenience) requests a physical view or a logical view. The check is performed similar to operation 602 of FIG. 6. When the first client device 202 requests a physical view, the server 201 performs operations 702 through 712. When the first client device 202 requests a logical view, the server 201 performs operations 713 through 720.

That is, the server 201 provides physical view information to the first client device 202 when the first client device 202 requests a physical view (operation 702). The provided physical view information is the information that can display the physical view illustrated in FIG. 3. The physical view information may include information on the contents that can be provided by all the client devices connected to the network.

When the first client device 202 selects one of the client devices 202 to 205 based on the provided physical view information, the server 201 checks whether the selected client device is in the power off state (operations 703 and 704). If the selected client device is in the power off state, the server 201 checks whether the user of the first client device 202 wants the driving of the selected client device (operation 705).

When the user of the first client device 202 wants the selected client device to be driven, the server 201 controls the driving of the selected client device through the network (operation 706). Accordingly, the selected client device is turned on. The driving control of the client device is the same as that described with reference to FIG.2.

When the client device is in the ready state after the driving of the client device is controlled, the server 201 provides the information on the contents stored in the selected client device to the first client device 202 while the selected client device is turned on (operations 707, 708, and 709).

When the user of the first client device 202 requests the reproduction of the contents based on the provided information on the contents (or content list information) (operation 710), the server 201 requests the reproduction of the selected contents to the selected client device (operation 711), and updates the client priority information between the first client device 202 and the server 201. Accordingly, the highest priority of the client priority information of the first client device 202 is the contents that are requested to be reproduced and the client device for providing the contents that are requested to be reproduced in operation 710.

In operation 704, if the client device is not in the power off state, the server 201 progresses to operation 709 and performs the above-described process.

When the user of the first client device 202 requests a specific logical view, the server 201 provides the desired logical view information to the first client device 202. The provided logical view information has the information that can display the logical view illustrated in FIG. 4A.

When the user of the first client device 202 selects the contents based on the provided logical view information, the server 201 checks whether the client device for storing the selected contents is in the power off state (operations 714 and 715). When the contents that cannot be immediately reproduced are selected based on the provided logical view information, it is determined that the client device corresponding to the selected contents is in the power off state.

The server 201 checks whether the user of the first client device 202 wants to drive the corresponding client device (operation 716). When the user of the first client device 202 wants to drive the corresponding client device, the server 201 controls the driving of the corresponding client device through the network (operation 717). Accordingly, when the corresponding client device is turned on and the client device is in the ready state (operation 718), the server 201 changes corresponding contents to the power on state in the logical view provided to the first client device 202 (operation 719). That is, the contents can be immediately reproduced.

Next, the server 201 updates the client priority information of the first client device 202 (operation 721) while requesting the corresponding client device to reproduce the contents (operation 720). Accordingly, the highest priority of the client priority information of the first client device 202 is the contents selected in operation 714.

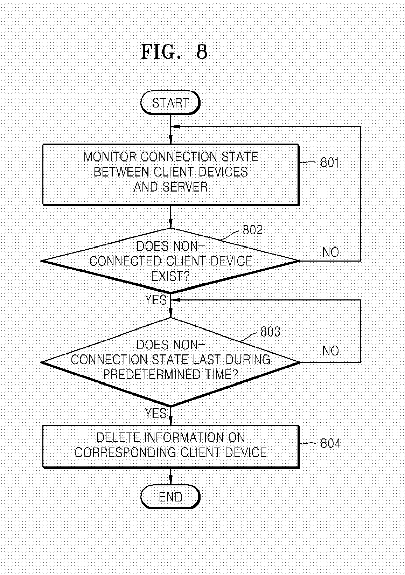

FIG. 8 is a flowchart illustrating an information deleting operation of the client device in the content managing method of FIG. 6 or 7. Hereinafter, the operations of the method illustrated by the flowchart of FIG. 8 will be described with reference to FIGS. 2 and 8.

The server 201 monitors the connection state between the server 201 and each one of the first to fourth client devices 202 to 205 connected to the network (operation 801). If there is a client device that is not connected with the server 201 (operation 802), the server 201 determines whether the non-connection state lasts for a predetermined time (operation 803).

When the non-connection state lasts for the predetermined time, the server 201 deletes the information on the non-connected client device from the information stored in the storage unit 2013. Accordingly, the information on the non-connection client device can be deleted from the physical view information and the logical view information generated by the server 201 (operation 804). For example, when the fourth client device 205 is in the non-connection state for the predetermined time, i.e., the fourth client device 205 is not connected to the server 201, the information on the fourth client device 205 is deleted from the physical view information and the logical view information generated by the server 201.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

As described above, according to the present invention, since information on contents, which can be provided by all the client devices connected to a network such as a home network, is provided to a client device which requests a content list using a physical view form or various logical view forms, it is possible to accurately, rapidly, and easily search the contents stored in all the client devices connected to the network, without performing the content sharing process of every client device.

In addition, according to the present invention, since the information on the contents which can be provided by all the client devices is provided to a client device which requests a content list, regardless of the power on/off state of the client devices connected to the network, it is possible to search the contents which can be provided by a client device which is in the power off state.

Furthermore, according to the present invention, since the state information of the client device or the state information of the contents based on the power on/off state of the client device is also provided when providing the information on the contents which can be provided by the client devise connected to the network, a user of the client device which requests the content list can easily check a client device which can immediately operate or contents which can be immediately reproduced based on the provided information on the contents.

Moreover, according to the present invention, since a logical view of unifying the information on the contents provided by the client devices connected to the network based on the client priority is provided, the user of the client device which requests the content list can easily check the information on the contents which are recently searched.

In addition, according to the present invention, since the reproduction of contents of the client device can be controlled even when the power of the client device including the contents which are requested to be reproduced is in the power off state, it is possible to easily reproduce the contents.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of managing contents on a network connecting a server (201) and a plurality of client devices (202-205), the method comprising:
receiving a content list request from a first client device (202) of the plurality of client devices (202-205); and
providing one of physical view information and at least one type of logical view information to the first client device (202), each of the physical view information and the at least one type of logical view information comprising information on contents providable by at least one client device of the plurality of client devices (202-205) .

2. The method of claim 1, wherein the providing the one of the physical view information and the at least one type of logical view information to the first client device (202) is performed in response to a request of a user of the first client device (202).

3. The method of claim 1 or claim 2, wherein the at least one type of logical view information comprises logical view information based on client priority, logical view information based on a content type, and logical view information based on additional content information.

4. The method of claim 3, wherein the logical view information based on the client priority is updated if one of the plurality of client devices (202-205) accesses the server (201).

5. The method of any preceding claim, wherein the physical view information and the logical view information comprise information based on a power on state or a power off state of at least one of the plurality of client devices (202-205).

6. The method of claim 5, further comprising:
monitoring a connection state between the server (201) and the at least one of the plurality of client devices (202-205);
if the at least one of the plurality of client devices (202-205) is not connected to the server (201) in a non-connection state, checking whether the non-connection state lasts for a predetermined time; and
if the non-connection state lasts for the predetermined time, deleting information on the at least one of the plurality of client devices (202-205) from the physical view information and the logical view information.

7. The method of claim 5 or claim 6, further comprising:
selecting a client device of the plurality of client devices (202-205) in the physical view information;
if the selected client device is in the power off state, turning on the selected client device through the network;
if the selected client device is turned on, changing a state of the selected client device in the physical view information;
including information on contents stored in the selected client device into the physical view information; and
if at least one content of the selected client device is selected based on the physical view information, requesting the selected client device to reproduce the selected content.

8. The method of any one of claims 5 to 7, further comprising:
selecting one of contents of the logical view information;
if a client device corresponding to the selected content is in the power off state, turning on the corresponding client device through the network;
if the corresponding client device is turned on, changing a state of the selected content in the logical view information; and
requesting the corresponding client device to reproduce the selected content.

9. An apparatus for managing contents on a network connecting a server (201) and a plurality of client devices (202-205), wherein the server (201) comprises:
a transmitting/receiving unit (2011) which is operable to receive a content list request from a first client device (202) of the plurality of client devices (202-205) and to transmit view information comprising information on contents providable by the plurality of client device, to the first client device (202);
a storage unit (2013) which is operable to store the information on all of the contents providable by the plurality of client devices (202-205); and
a processor (2012) which is operable to generate one of physical view information and at least one type of logical view information based on the information stored in the storage unit (2013) and to transmit the generated one of physical view information and at least one type of logical view information to the transmitting and receiving unit, if the content list request is received from the transmitting and receiving unit.

10. The apparatus of claim 9, wherein the physical view information and the logical view information comprise information based on a power on state and a power off state of at least one of the plurality of client devices (202-205).

11. The apparatus of claim 10, wherein the at least one of the plurality of client devices (202-205) i) is selected from the physical view information or ii) corresponds to a content selected from the logical view information, and
wherein if the processor (2012) receives information that the at least one of plurality of client devices (202-205) in the power off state, the processor (2012) is operable to transmit a power on request signal to the transmitting and receiving unit to turn on the at least one of the plurality of client devices (202-205) through the network.

12. The apparatus of claim 11, wherein, if the at least one of the plurality of client devices (202-205) is selected from the physical view information and is turned on, the processor (2012) is operable to transmit physical view information of contents of the selected one of the plurality of client devices (202-205) to the transmitting and receiving unit,
if the one of the plurality of client devices (202-205) corresponds to the selected content from the logical view information and is turned on, the processor (2012) is operable to transmit a reproduction request of the selected content to the transmitting and receiving unit.

13. The apparatus of any one of claims 9 to 12, wherein the processor (2012) is operable to generate one of the physical view information and the at least one type of logical view information in accordance with a request of a user of the first client device (202).

14. The apparatus of any one of claims 9 to 13, wherein the at least one type of logical view information comprises logical view information based on client priority, logical view information based on a content type, and logical view information based on additional content information.

15. The apparatus of claim 14, wherein the logical view information based on the client priority is updated by the processor (2012) if one of the plurality of client devices (202-205) accesses the server (201).

16. The apparatus of any one of claims 9 to 15, wherein the processor (2012) is operable to monitor a connection state between the server (201) and at least one of the plurality of client devices (202-205), and if the one of the plurality of client devices (202-205) is not connected with the server (201) for a predetermined time, the server (201) is operable to delete information on the one of the plurality of client devices (202-205) from the physical view information and the logical view information.

17. A computer-readable medium having embodied thereon a computer program for a method of managing contents on a network connecting a server (201) and a plurality of client devices (202-205), the method comprising:
receiving a content list request from a first client device (202) of the plurality of client devices (202-205), by the server (201); and
providing one of physical view information and at least one type of logical view information to the first client device (202), each of the physical view information and the at least one type of logical view information comprising information on contents providable by the plurality of client devices (202-205).
